(19) Europäisches Patentamt
European Patent Office
Office européen des brevets

(11) **EP 1 875 225 B1**

(12) **EUROPÄISCHE PATENTSCHRIFT**

(45) Veröffentlichungstag und Bekanntmachung des Hinweises auf die Patenterteilung:
**12.09.2012 Patentblatt 2012/37**

(51) Int Cl.:
***G01N 30/60*** *(2006.01)*

(21) Anmeldenummer: **06753397.6**

(22) Anmeldetag: **21.04.2006**

(86) Internationale Anmeldenummer:
**PCT/EP2006/003663**

(87) Internationale Veröffentlichungsnummer:
**WO 2006/111397 (26.10.2006 Gazette 2006/43)**

(54) **Chromatographiesäule**

Chromatography column

Colonne de chromatographie

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **21.04.2005 DE 102005019703**

(43) Veröffentlichungstag der Anmeldung:
**09.01.2008 Patentblatt 2008/02**

(73) Patentinhaber: **Atoll GmbH**
**88250 Weingarten (DE)**

(72) Erfinder:
• **VETTER, Udo, Johannes**
**88214 Ravensburg (DE)**
• **FRIEDLE, Jürgen**
**70597 Stuttgart (DE)**

• **STRITTMATTER, Manfred**
**88273 Fronreute-Staig (DE)**
• **BRITSCH, Lothar**
**79276 Reute/Freiburg (DE)**

(74) Vertreter: **Gleiss, Alf-Olav et al**
**Gleiss Grosse Schrell & Partner**
**Patentanwälte Rechtsanwälte**
**Leitzstrasse 45**
**70469 Stuttgart (DE)**

(56) Entgegenhaltungen:
EP-A- 0 655 624    WO-A-02/053256
WO-A1-00/72002    US-A- 4 309 286

• **PATENT ABSTRACTS OF JAPAN Bd. 2003, Nr. 12, 5. Dezember 2003 (2003-12-05) & JP 2004 283647 A (NIHON MEDI PHYSICS CO LTD), 14. Oktober 2004 (2004-10-14)**

## Beschreibung

## Technisches Gebiet

Eine Miniatur-Chromatographiesäule wird offenbart, bei der eine dauerhafte definierte Verdichtung eines zwischen zwei Filterplatten eingeschlossenen Chromatographiematerials durch einen in die Säule eingeschobenen, die obere Filterplatte fixierendes und mit einer Öffnung geeigneter Größe zu dieser versehenen Stempel erzielt wird. Die Säulen können, mit Hilfe einer multiplen Haltevorrichtung in großer Zahl eingesetzt, für die gleichzeitige Verarbeitung einer ebensolchen Zahl chemischer oder biologischer Proben, in Anwendungen mit schrittweiser Elution eingesetzt werden. Der Fluss in den Säulen wird dabei entweder durch die Schwerkraft oder durch Zentrifugalkraft oder eine Kombination von beiden bewirkt.

## Stand der Technik (Hintergrund der Erfindung)

Chromatographische Trennungen chemischer oder biologischer Substanzgemische in flüssigen Proben an Chromatographiematerialien werden meist unter Verwendung von Säulen durchgeführt, bei denen die verdichtete Packung dieser Materialien durch einen in seiner Position im Säulenrohr fest einstellbaren Adapter fixiert wird (EP 0 655 624 A1).

Die Chromatographiematerialien können elastisch, quasi-elastisch oder nicht-elastisch sein. Werden nicht-elastische Materialien verwendet, ergibt sich nach einer gewissen Zeit aufgrund von Sedimentation eine definierte Packung des Materials innerhalb der Säule. Es ist also nicht zwingend erforderlich, bei Einführen des Stempels eine physikalische Verdichtung des Chromatographiematerials zu bewirken.

Die Notwendigkeit für die Fixierung der Packung hinsichtlich Höhe und Dichte ergibt sich aus dem elastischen Verhalten bestimmter Chromatographiematerialien beim Packen unter Fluss. Insbesondere hochporöse Trägermaterialien, wie die bekannten kohlehydrat- oder polymerbasierten gelartigen Matrices, z.B. Sepharose®, Toyopearl®, Fractogel®, Fractoprep®, Macroprep®, Unosphere® und andere, sowie die aus diesen durch chemische Oberflächenmodifizierung hervorgegangenen Derivate, nehmen beim Sedimentieren aus homogener Suspension während des Packvorgangs ein von der Dauer und linearen Flussrate abhängiges Volumen an. Dabei ist der Packdruck die letztlich die eintretende Verdichtung des Gels bestimmende Größe. Sobald jedoch dieser auf das gepackte Gel wirkende Druck aufgehoben wird, macht sich die Elastizität der Packung dergestalt bemerkbar, dass eine zunächst rasche und dann langsamer werdende Expansion des gepackten Gelsediments eintritt. Diese kommt zum Stillstand, wenn die sedimentierende Wirkung der Schwerkraft sich im Gleichgewicht mit dem Expansionsdruck befindet. In der Regel entspricht das bei der Expansion einer zuvor unter Fluss verdichteten Gelsuspension resultierende Volumen nicht ganz demjenigen, welches aus derselben Gelmenge bei Sedimentation unter der Schwerkraft erhalten wird.

Da der Druckabfall über einer gegebenen Gelpackung in komplexer Weise von der linearen Flussrate, der Viskosität des Laufmittels, der Temperatur und weiteren Parametern abhängt, stellt sich bei offen betriebener Gelpackung jeweils eine charakteristische Verdichtung ein, die darüber hinaus während der Durchführung einer chromatographischen Trennung nicht konstant bleibt. Eine unveränderliche und definierte Packungsdichte ist jedoch für die Erzielung reproduzierbarer Ergebnisse bei chromatographischen Trennungen unabdingbar. Daher werden Chromatographiesäulen, die mit quasi-elastischen Trägermaterialien zu variabel vorgegebener Höhe befüllt werden sollen, vorzugsweise mit die Packung abschließenden Adaptern ausgestattet, die durch mechanische Verriegelung, unabhängig vom Druckabfall in der Säule, in einer definierten Position gehalten werden können. Derartige Adapter bedürfen in der Regel einer aufwändigen Konstruktion und tragen, insbesondere bei kleinvolumigen Säulen, erheblich zu den hohen Herstellkosten derselben bei. In einer anderen Ausführungsform derartiger Säulen wird auf die Möglichkeit zur Vorgabe einer einstellbaren Höhe der Gelpackung zugunsten einfacherer Konstruktion verzichtet. Hierbei wird ein sog. feststehendes Endstück verwendet, welches a priori nur eine einzige vorgegebene Betthöhe der Gelpackung zulässt. Bei derartigen Säulen unterliegt die Packprozedur der besonderen Schwierigkeit, den Abschluss der Säule im gepackten Zustand des Chromatographiematerials zu bewerkstelligen, ohne dass währenddessen das Gel bereits wieder elastisch expandiert.

Beide Ausführungsarten von Säulen werden in der Regel zum Betrieb an eine Pumpe angeschlossen, die das Laufmittel mit einer geeigneten Flussrate liefert und in der Lage ist, dabei den Druckabfall über der Säule zu überwinden. Daher sind diese Säulen, auch bei kleinem Volumen an gepacktem Chromatographiematerial, sequentiell zu betreiben. Ein gleichzeitiger Betrieb mehrerer Säulen erfordert dagegen den Einsatz einer entsprechenden Zahl von Pumpensystemen, was einen hohen apparativen Aufwand bedeutet.

Gerade in den Biowissenschaften besteht aber häufig ein Bedarf für die möglichst gleichzeitige Verarbeitung von zahlreichen kleinvolumigen Proben in chromatographischen Trennschritten. Um aus dem Dilemma des entweder hohen Zeitaufwands bei sequentieller Durchführung der Trennungen oder des immensen apparativen Aufwands bei gleichzeitiger Verwendung mehrerer Chromatographiesysteme herauszukommen, wurden in der Vergangenheit verschiedene Lösungen entwickelt, die allerdings den eigentlichen chromatographischen Trennschritt entweder auf einfache Sequenzen von Adsorption und Desorption reduzieren, oder bei denen das eingesetzte Chromatographiemedium nicht mehr, im Sinne klassischer Chromatographiesäulen, gleichmäßig vom Laufmittel durchströmt wird. Diese technischen Lösungen zur gleichzeitigen Trennung multipler Proben erlauben daher nicht, Trennergebnisse in einer Qualität zu erzielen, wie sie dem Fachmann von den klassischen Chromatographiesäulen her bekannt sind. Dies betrifft insbesondere die erreichbare Zahl theoretischer Böden sowie die Asymmetrie der Probenverteilung im Chromatographiematerial. Als Beispiele seien die sog. "Spin Columns" (Säulen für Zentrifugation) und Vorrichtungen zur parallelen Durchführung von "Batch Adsorption" (Adsorption aus homogener Suspension) mit zahlreichen Proben genannt. Spin Columns, wie sie etwa in der US 6,103,195 offenbart werden, enthalten das jeweilige Chromatographiematerial sozusagen als Filterkuchen, der mittels einer Filterplatte in der Säule gehalten wird. Nach erfolgter Aufgabe von Probenflüssigkeit oder Laufmittel werden diese durch Zentrifugation zum Durchströmen des Chromatographiematerials gebracht. Hierbei liegt erstens das Chromatographiematerial, so es sich um eines der oben genannten quasi-elastischen Gele handelt, in keiner definierten Verdichtung gepackt vor. Zweitens erfolgt die Durchströmung des Chromatographiematerials mit Laufmittel im Zentrifugalfeld grundsätzlich asymmetrisch, da die Zentrifugalkraft auch im günstigsten Fall der zentrosymmetrischen Anordnung der Säule lediglich für deren mittlere Längsachse einen rechten Winkel mit der Bahngeschwindigkeit bildet, für alle anderen Orte des Säulenquerschnitts jedoch einen hiervon abweichenden Winkel. Dies hat wegen der hohen Beweglichkeit aufgebrachter Flüssigkeiten zur Folge, dass das Chromatographiematerial mit der Probe ungleichmäßig beladen wird und auch die nachfolgende Elution ungleichmäßig erfolgt.

In anderen Ausführungsformen von Säulen, die in großer Zahl ohne Anschluss an Pumpensysteme simultan zu betreiben sind, wird ein gleichmäßiger Fluss des Laufmittels durch eine meist zylindrische Packung von Chromatographiematerial mit Hilfe des gleichzeitigen Anlegens von Vakuum an die Auslaufstutzen der Säulen bewirkt. Hierfür werden hauptsächlich genormte Anordnungen von Säulen in Form von 96-Well Mikrotiter-oder Filterplatten verwendet. Auch hier liegen die verwendeten Chromatographiematerialien nicht in definiert gepackter Form vor. Außerdem sind diese Anordnungen für Anwendungen mit Proteinen und anderen hochmolekularen biologischen Substanzen weniger gut geeignet, da das Chromatographiematerial nach einiger Zeit von Luft oder einem anderen Gas durchströmt wird. Verbleibende interstitielle Flüssigkeit kann zwar durch zusätzliche Zentrifugation aus dem Chromatographiematerial entfernt werden, jedoch sind aufgrund von unterschiedlicher Flussrate im Vakuumbetrieb bei einzelnen Säulen keine einheitlichen Bedingungen für die Trennprozesse zu realisieren. Ein weiterer Nachteil der vakuumbetriebenen Multisäulenanordnungen liegt in der möglichen Denaturierung von Proteinen durch Schaumbildung beim Austritt der Probe aus dem Chromatographiematerial, da an dieser Stelle der herrschende Unterdruck besonders wirksam wird.

Eine der einfachsten Möglichkeiten, zahlreiche chromatographische Trennungen im Bereich biologischer wasserlöslicher Substanzen simultan auszuführen, ist durch die Verwendung offener schwerkraftgetriebener Säulen gegeben. Diese sind in zahlreichen Ausführungsformen von vielen Anbietern und für unterschiedliche Zwecke vorbereitet, zu bekommen. Beispiele sind etwa die Produkte Econo-Pac® Columns oder Poly-Prep® Ion Exchange Columns (BIO-RAD Laboratories, Inc., Hercules CA, USA) oder die Mobius® Plasmid Kits (Merck Biosciences GmbH, Schwalbach, Deutschland). Diese Säulen arbeiten generell mit schwerkraftgetriebener Stufenelution und erlauben die Durchführung von echten chromatographischen Trennungen. Allerdings liegen die Chromatographiemedien hier wiederum lediglich in einer geringen Packungsdichte vor, die durch die Sedimentation der Gelpartikel unter der durch die Schwerkraft induzierten Flussrate zustande kommt. Somit wird die Leistungsfähigkeit der eingesetzten Trennmedien, vor allem hinsichtlich der erreichbaren Bodenzahl, wiederum nicht voll genutzt.

Simultan durchgeführte Trennungen im Batchmodus, d.h. durch Adsorption an das Trennmedium aus homogener Suspension und nachfolgender Desorption, repräsentieren die einfachste Technik zur gleichzeitigen Anwendung der verschiedenen Chromatographiemedien mit zahlreichen Proben. Grundsätzlich bietet diese Technik nur eine Trennleistung entsprechend einem theoretischen Boden je Separationsschritt. Die Kontinuität nahtlos aufeinanderfolgender Einstellungen des Adsorptionsgleichgewichts, wie in einer Chromatographiesäule, ist hierbei nicht gegeben. Ein weiterer Nachteil der Batchmethode ist der Verbleib der Flüssigkeit im intraporösen Volumen des Trennmediums bei jedem Schritt der Abtrennung von Überstand, unabhängig davon mit welcher Methode (Dekantation, Filtration, etc) diese Abtrennung erfolgt. Diese intraporöse Flüssigkeit enthält noch sämtliche der gelösten Substanzen in den Konzentrationen des vorangegangenen Arbeitsschritts und überträgt diese somit in den nachfolgenden Schritt. Prinzipiell kann daher im Batchmodus ein der chromatographischen Trennleistung in Säulen entsprechendes Ergebnis erst bei einer sehr hohen Anzahl aufeinanderfolgender abgestufter Adsorptions- und Desorptionsschritte erzielt werden. Dadurch sind der Anwendung dieser Methode deutliche praktische Grenzen gesetzt.

Unter dem Aspekt der chromatographischen Trennleistung betrachtet, haben die aufgeführten technischen Lösungen entweder den Nachteil, dass sie nur mit hohem zeitlichem und apparativem Aufwand parallelisiert werden können, oder dass die chromatographische Trennleistung der eingesetzten Trennmedien, mangels ausreichender und dauerhafter Verdichtung derselben, nicht vollständig ausgenutzt wird. Besonders die zuletzt genannte Einschränkung könnte teilweise oder vollständig durch die Konstruktion von Schwerkraft getriebenen Säulen beseitigt werden, in denen die Chromatographiemedien jedoch ausreichend dicht gepackt vorliegen. Dem Fachmann ist geläufig, dass mit zunehmender Verdichtung einer derartigen möglichst homogenen Packung, etwa von perlförmigen Mikropartikeln, das zwischen den Partikeln vorhandene Volumen geringer wird und damit die theoretische Bodenzahl dieser Packung in chromatographischen Trennungen zunimmt. Für gegebene Trennmedien wird dabei die maximale Bodenzahl jeweils bei einer ganz bestimmten optimalen Verdichtung erreicht.

Die zu lösende technische Aufgabe besteht demnach darin, eine Chromatographiesäule in einfacher Bauweise so zu konstruieren, dass unterschiedliche Chromatographiemedien bei einheitlicher Geometrie der Säulenpackung zu jeweils optimaler dauerhafter Verdichtung darin gepackt werden können. Die betreffenden Säulen sollen außerdem in großer Zahl gleichzeitig und entweder nur unter der Schwerkraft oder in Kombination von Schwerkraft- und Zentrifugalkrafteinwirkung in Anwendungen mit schrittweiser Elution betrieben werden können. Charakteristischerweise sollen die betreffenden Säulen in miniaturisierter Form preisgünstig herstellbar sein und in ihrer für parallele Verwendung ausgelegten Ausführung mit heute existierenden Laborrobotersystemen kompatibel sein.

**Ausführliche Beschreibung mit Beispielen**

Das beschriebene technische Problem wird dadurch gelöst, dass eine Chromatographiesäule mit den Merkmalen des Anspruchs 1 geschaffen wird.

Bevorzugt wird in einer zylindrischen Chromatographiesäule ein quasielastisches Chromatographiemedium zwischen zwei mechanisch ausreichend stabilen Filterplatten geeigneter Porosität eingeschlossen wird, dergestalt, dass die untere Filterplatte mit ihrem äußeren Rand auf einer in die Säule integrierten kreisrunden Auflage aufsitzt und die obere Filterplatte durch ein in die Säule eingeschobenes passgenau gefertigtes Probenreservoir, mit unterer zentraler Öffnung, in seiner das verdichtete Chromatographiemedium nach oben begrenzenden Position dauerhaft gehalten wird. Die obere Filterplatte ist hierbei in den unteren Teil des Probenreservoirs integriert. Anstelle eines auch als Probenkammer bezeichneten Probenreservoirs kann auch ein Stempel verwendet werden. Besonders vorteilhaft ist es jedoch, diesen als Probenreservoir auszubilden oder durch ein Probenreservoir zu ersetzen, weil sich dadurch eine besonders kompakte Bauform der Chromatographiesäule erreichen lässt.

Die Porosität der Filterplatten wird im Verhältnis zu der Korngrößenverteilung der verwendeten Chromatographiematerialien so ausgewählt, dass die jeweils kleinsten Partikel desselben durch die Filterplatten sicher zurückgehalten werden. Im Falle der Verwendung von Tiefenfiltern sind beispielsweise für ein Chromatographiematerial mit einer Korngrößenverteilung von 40 - 90 mm Filterplatten mit einer Porengröße von bis zu 25 $\mu$m zu verwenden. Die Filterplatten können aus allen dem Fachmann bekannten geeigneten Materialien bestehen, wie z.B. Polypropylen, Polypropylen-Polyethylen Mischpolymer, Polytetrafluorethylen, Cellulose, usw. Sie sind hinsichtlich ihrer Dicke so auszuwählen, dass sie bei der Verwendung in der erfindungsgemäßen Chromatographiesäule dem Druck des verdichteten Chromatographiematerials ohne Abweichungen von der planaren Form standhalten. Filterplatten aus Polypropylen-Polyethylen Mischpolymer mit einer Dicke von 0.45 mm haben sich beispielsweise für die Verwendung mit Chromatographiematerialien vom Typ Fractogel® (M) oder Sepharose® FF oder Sepharose® XL bei 20% Kompression in den erfindungsgemäßen Chromatographiesäulen mit einem Innendurchmesser von 5 mm als mechanisch ausreichend stabil erwiesen. Für Säulen mit größerem Innendurchmesser als 5 mm sind entsprechend dickere Filterplatten zu verwenden, z.B. bei 10 mm Innendurchmesser mit einer Dicke von 1 mm.

Die definierte dauerhafte und produktspezifische Verdichtung des Chromatographiemediums wird nach Einfüllen des berechneten Volumens einer eingestellten Suspension eines Chromatographiemediums in den Säulenkörper dadurch erreicht, das beim nachfolgenden Einführen des Stempels beziehungsweise Probenreservoirs einschließlich der oberen Filterplatte das Chromatographiemedium genau zu dem vorbestimmten Volumen gleichmäßig komprimiert wird. Der Außendurchmesser des Stempels beziehungsweise Probenreservoirs ist im Verhältnis zum Innendurchmesser der Säule so gewählt, dass der Stempel/das Probenreservoir nach Einführung in die Säule bis zu einer durch einen Begrenzungsring vorgegebene Tiefe dauerhaft in dieser Position verbleibt und dies auch entgegen der elastischen Rückstellkräfte der komprimierten Chromatographiemedien, die gegen die obere Filterplatte gerichtet sind. Wurden die Dimensionen der Säule und ihrer Einzelteile in geeigneter Weise gewählt, so konnten die oben erwähnten quasi-elastischen Chromatographiematerialien trotz Komprimierung um beispielsweise 20%, im Vergleich zu dem aus der gleichen Menge an Chromatographiematerial erhaltenen Volumen nach Sedimentation unter der Schwerkraft, nach Befüllung des Probenreservoirs mit Flüssigkeit, ihrerseits unter der Schwerkraft betrieben werden. Vorteilhaft konnte der longitudinale durch die Schwerkraft getriebene Fluss in derartigen senkrecht aufgestellten Säulen durch kurzzeitige Zentrifugation derselben bei niedrigen Beschleunigungen angestoßen werden, ohne dass in den Säulen merkliche leistungsmindernde Asymmetrien der Flussverteilung auftraten.

Es sei hier noch darauf verwiesen, dass die erfindungsgemäßen Säulen vorzugsweise mit quasi-elastischen Chromatographiematerialen befüllt werden. Denkbar ist es aber auch, nicht-elastische Chromatographiematerialen einzubringen. Auch bei Verwendung dieser Materialien ergibt sich eine definierte Packung. Es bedarf hier beim Einführen des Stempels beziehungsweise der Probenkammer keiner physikalischen Verdichtung des Chromatographiematerials über die Packungsdichte einer lediglich durch Sedimentation erhaltenen Packung derselben Menge des Chromatographiematerials hinaus. Sowohl bei Einsatz quasi-elastischer als auch bei Verwendung nicht-elastischer Chromatographiematerialien bewirkt die Einführung und Absenkung des Stempels beziehungsweise der Probenkammer bis zum Anschlag in den Säulenkörper eine rasche Verdrängung von Flüssigkeit aus der in den Säulenkörper unmittelbar zuvor eingefüllten Suspension der Chromatographiematerialien, die vorzugsweise Partikel umfassen. Der mittlere Abstand zwischen diesen Partikeln verringert sich hierdurch innerhalb von wenigen Sekunden in derselben Weise, wie sie beim Stand der Technik durch den von außen erzwungenen Fluss eines geeigneten Laufmittels in Richtung der Säulenachse von oben nach unten erreicht wird.

Bei der hier beschriebenen Chromatographiesäule wird die sogenannte "Klassierung" der in der Regel unterschiedlich großen Partikel des Chromatographiematerials wirkungsvoll verhindert, die sonst durch die unterschiedliche Sedimentationsgeschwindigkeit dieser Partikel eintreten würde. Es ergibt sich damit eine weitgehend homogene Verteilung der unterschiedlichen Partikelgrößen in der Packung des Chromatographiematerials, also die für chromatographische Anwendungen erforderliche homogene Packung. Die Herstellung der verdichteten Packung entspricht also gewissermaßen einem stark beschleunigten Sedimentationsvorgang, beim dem den Partikeln des Chromatographiematerials keine Zeit zur Ausbildung inhomogener Größenverteilungen bleibt. Größere Partikel können also nicht, wie sonst üblich, rascher als kleine mit derselben Dichte sedimentieren. Dies gilt für sämtliche partikulären Chromatographiematerialien, die herstellungsbedingt aus unterschiedlich großen Partikeln bestehen, also ein sogenanntes Kornband aufweisen. Beim Packen von monodispersen Chromatographiematerialien spielt der Aspekt der beschleunigten Verdichtung hingegen keine besondere Rolle. Bei diesen erzielt man jedoch bei Einbringung eines Stempels oder einer Probenkammer in die Chromatographiesäule naturgemäß ebenso homogene Packungen. Es bedarf daher keiner besonderen Behandlung derartiger Chromatographiematerialien. Die Mehrzahl der relevanten Chromatographiematerialien ist jedoch polydispers hinsichtlich der Partikelgröße, sodass die hier beschriebene Verdichtung besonders vorteilhaft ist.

Der Unterschied zwischen elastischen und quasi-elastischen Chromatographiematerialien einerseits und nichtelastischen Materialien andererseits besteht hauptsächlich darin, dass bei letzteren die sich einstellende Sedimentdichte von der Sedimentationsgeschwindigkeit weitgehend unabhängig ist, dass heißt, die Partikel ordnen sich beim Sedimentieren immer in eine räumlich dichte Packung mit geringst möglichem interstitiellem Volumen. Für die Packung dieser Materialien in die erfindungsgemäßen Säulen kommt es also nur darauf an, eine dem gewünschten gepackten Volumen entsprechende Menge an eingestellter Suspension in die Säulen einzubringen. Die in der Chromatographiesäule vorgesehenen Filterplatten stellen dabei lediglich die flüssigkeitsdurchlässigen oberen und unteren Abschlüsse der Partikelpackung dar und fixieren auch deren Geometrie, insbesondere die im rechten Winkel zur Mittelachse der Chromatographiesäule erwünschten Eintritts- und Austrittsflächen der Packung.

Beim Sedimentieren von elastischen und quasi-elastischen Chromatographiematerialien wird keineswegs die maximale Dichte einer Packung erhalten, sondern lockere Anordnungen abgesetzter Partikel mit nicht ohne weiteres vorhersagbarem Gesamtvolumen. Es haben nämlich viele Parameter Einfluss auf das Sedimentationsverhalten. Zum einen sind beispielsweise die Partikel der Chromatographiematerialien selbst mehr oder weniger stark elastisch verformbar. Zum anderen können adhäsive Wechselwirkungen zwischen den gleichartigen Partikeln deren Zusammenlagern zu einer maximal verdichteten Packung verhindern.

Durch Einwirkung einer äußeren mechanischen Kraft auf eine derartige lockere Packung, vorzugsweise in Richtung der Säulenachse, werden die Zwischenräume zwischen den Partikeln zwangsweise und unter Austritt interstitieller Flüssigkeit verringert, was für die Erzielung einer guten chromatographischen Trennleistung Bedingung ist. Bei einer stärkeren Verdichtung können dann auch zunehmend Partikel des Chromatographiematerials reversibel deformiert werden, was sich kontraproduktiv auswirken kann.

Es kommt also darauf an, die experimentell bestimmte beste relative Verdichtung einzustellen. Wird dazu eine Kraft auf das Chromatographiematerial ausgeübt, so zeigt sich, dass die Wegnahme der die Verdichtung bewirkenden Kraft eine mehr oder weniger rasche Expansion der verdichteten Packung zu einem größeren Volumen erlaubt. Im Falle idealer Elastizität würde sich dabei das Volumen eines lockeren Schwerkraftsediments wieder einstellen. In der Praxis wird jedoch meist nur eine partielle Rückexpansion beobachtet. Man spricht daher auch von "Pseudo-Elastizität" des Chromatographiematerials. Es ergibt sich hieraus die Notwendigkeit, dass verdichtete Material durch mechanische flüssigkeitsdurchlässige Barrieren in einem vorverdichteten Zustand zu halten. Dies wird durch die hier beschriebenen erfindungsgemäßen Filterhalter auf einfache Weise erreicht. Insbesondere hat sich dies für sogenannte Minisäulen, also für Chromatographiesäulen mit kleinen Abmessungen, insbesondere kleinen Volumina, bewährt.

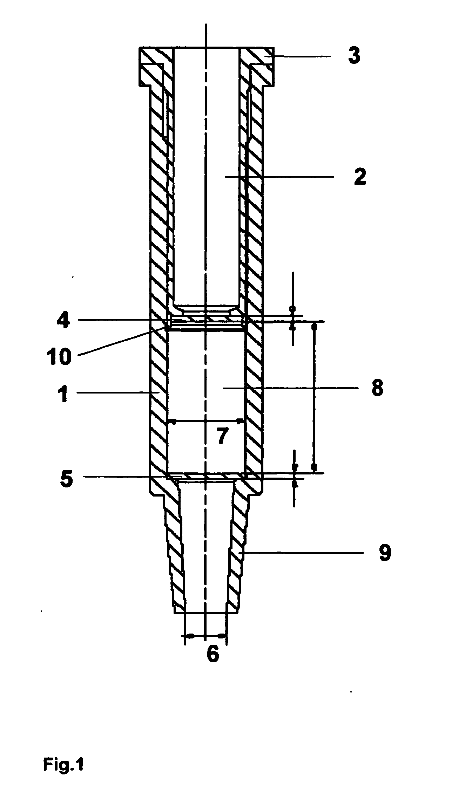

Eine besonders bevorzugte Ausführungsform der neuen Säule, für Anwendungen mit kleinen Volumina an Chromatographiemedien und zu trennenden Substanzproben, ist in Figur 1 als Konstruktionsskizze dargestellt. Die nummerierten Teile und Merkmale sind: Säutenkörper 1, Probenkammer 2, Anschlag 3 für Probenkammer, Filterplatte 4 oben, Filterplatte 5 unten, Durchmesser 6 Auslauföffnung, Innendurchmesser 7 Gelkammer, Gelkammer 8, Auslauf 9 mit Außenmaßen gemäß Luer-Standard. Die Darstellung zeigt die Säule ohne eingefülltes Chromatographiematerial und mit leerer Probenkammer. Die Einzelteile der Säule (Säulenkörper und Probenreservoir) können sowohl durch Drehen als auch mit Hilfe der Spritzgusstechnik hergestellt werden. Als geeignete Materialien für die Herstellung haben sich z.B. Polypropylen, Polyethylen, Polymethacrylat, Polyethyletherketon und Polystyrol erwiesen. Jedoch sind auch andere, dem Fachmann bekannte Werkstoffe der Klassen Kunststoffe und Metalle sowie Mischformen derselben in ähnlicher Weise verwendbar. Für Anwendungen im Bereich der Chromatographie biologischer Proben werden inerte Kunststoffmaterialien mit möglichst glatter Oberfläche bevorzugt. Letztere ermöglichen auch gegenüber der Herstellung aus Metallen die derzeit preisgünstigste Herstellung der Miniatursäulen in großer Zahl.

Der Säulenkörper der erfindungsgemäßen Chromatographiesäule besteht aus einem geraden Zylinder mit einem profilierten oberen Abschluss sowie einem sich nach unten verjüngenden konischen Auslaufstutzen am unteren Ende. Am Übergang zwischen Säulentubus und Auslaufstutzen befindet sich im Inneren der Chromatographiesäule eine hier kreisrunde Auflage für die untere Filterplatte, die passgenau auf diese aufgelegt wird. Die untere Filterplatte bildet den unteren Abschluss der Gelkammer und stellt unter allen Betriebsbedingungen eine undurchdringliche Barriere für die Partikel des in der Gelkammer gepackten Chromatographiematerials dar. Das obere Ende der Gelkammer wird durch die passgenau zugeschnittene obere Filterplatte verschlossen, die in der abgebildeten Ausführungsform in das untere Ende des hier als Probenkammer ausgebildeten Stempels eingesetzt ist. Die obere Filterplatte wird in gleicher Weise wie die untere Filterplatte durch eine kreisrunde Auflage, die sich am unteren Ende der Probenkammer befindet, in ihrer Position fixiert. Durch die Gesamtlänge der vollständig in den Säulenkörper eingeführten Probenkammer wird somit auch die Position der oberen Filterplatte dauerhaft festgelegt. Durch diese Anordnung der Filterplatten wird gleichzeitig die Höhe der Packung des Chromatographiematerials in der Säule festgelegt. Bei Innendurchmessern der Säulen von 3 mm bis zu 10 mm gewährleistet die mechanische Stabilität der 0,3 bis 2 mm dicken Filterplatten, bei denen es sich vorzugsweise um Tiefenfilter aus Polypropylen/Polyethylen, Polytetrafluorethylen oder Materialien mit ähnlichen Eigenschaften wie diese handelt, im Zusammenwirken mit den Filterauflagen, einen sicheren Einschluss des gepackten Chromatographiematerials in der Gelkammer. Dabei soll die untere Filterauflage eine Breite von 0,2 bis 2 mm, vorzugsweise 0,3 bis 1 mm, besonders bevorzugt jedoch 0,5 mm, aufweisen. Die Filterauflage am unteren Ende der Probenkammer soll bevorzugt in derselben Breite ausgeführt werden wie die untere Filterauflage im Säulenkörper. Sie kann jedoch auch bis zu einer Breite ausgeführt werden, die gerade noch eine zentrale Öffnung von wenigstens 0,5 mm für das Hindurchtreten von Flüssigkeit aus der Probenkammer belässt. Die in den Säulenkörper einzuschiebende Probenkammer ist so dimensioniert, dass ihr inneres Volumen, welches für die Aufnahme von Proben oder Laufmitteln zur Verfügung steht, ebenso groß oder größer ist als das Volumen der Gelkammer.

Das untere Ende des Stempels beziehungsweise der Probenkammer weist eine Dichtlippe auf, die beim Einführen in den Säulenkörper einen gegen Flüssigkeiten rundum dichtenden Abschluss mit der Innenwand des Säulenkörpers gewährleistet. Dadurch wird erreicht, dass an der Innenwand des Säulenkörpers anhaftende Partikel des Chromatographiematerials oder Flüssigkeitströpfchen restlos, zusammen mit der eingefüllten Suspension des Chromatographiematerials, nach unten mitgeführt werden, bis die vorgegebene Höhe und Verdichtung der Packung desselben erreicht ist. Dies ist dann der Fall, wenn der Stempel beziehungsweise die Probenkammer, in ihrer bevorzugten Ausführungsform, mit ihrem oberen Anschlag bis zum oberen Anschlag des Säulenkörpers in diesen eingeführt wurde.

Der Vorteil der Ausführung der Probenkammer mit oberem Anschlag besteht darin, dass das obere Ende der zusammengesetzten Säule eine nahtlose Oberfläche aufweist, wodurch das unbeabsichtigte Eindringen von Flüssigkeit oder Staubpartikeln in den Mikrospalt zwischen Säulenkörper und Probenkammer sicher vermieden wird. Ein weiterer Vorteil des oberen Anschlags besteht darin, dass beim Zusammenbau größerer Stückzahlen der erfindungsgemäßen Chromatographiesäule die rasche und genaue endgültige Positionierung der Probenkammer erheblich erleichtert wird. Weiterhin ist der hier als Probenkammer ausgebildete Stempel bezüglich seines Außendurchmessers so ausgeführt, dass er nach vollständiger Einführung in den Säulenkörper in diesem weitgehend festsitzt. Dies wird dadurch erreicht, dass der Außendurchmesser der Probenkammer 0,02 bis 0,1 mm, vorzugsweise 0,03 bis 0,05 mm größer gewählt wird als der Innendurchmesser des Säulenkörpers.

Durch die elastischen Eigenschaften der zur Herstellung von wenigstens einem dieser Teile verwendeten Materialien ist ein Kraftaufwand erforderlich, um das Probenreservoir in den Säulenkörper einzuführen. Dabei tritt eine elastische Verformung dieses Formteils oder beider Formteile ein, die eine Rückstellkraft zur Folge hat, die ihrerseits zum gegenseitigen Festhalten dieser Teile in der jeweiligen Position führt. Es wurde beobachtet, dass das Probenreservoir auch dann noch in seiner dergestalt fixierten Position verbleibt, wenn die Gelkammer mit verdichteten quasielastischen Chromatographiematerialien befüllt ist. Im Falle von z.B. Polymethacrylat basierten Gelen wie den Toyopearl® 650 (M) Typen hält die beschriebene Konstruktion Verdichtungen von bis zu 30% ohne weiteres monatelang ohne jede beobachtbare Veränderung stand. Die Verdichtung der Chromatographiematerialien bezieht sich dabei auf das verkleinerte Volumen, das durch Komprimieren aus einem gegebenen durch vollständige Sedimentation unter der Schwerkraft erhaltenen Volumen eines Sediments dieser Materialien erhalten wird. Das Volumen des unter der Schwerkraft erhaltenen Sediments wird dabei zu 100% gesetzt.

Der in die Chromatographiesäule eingeführte Stempel, der entsprechend den bisherigen Erläuterungen auch als Probenkammer ausgebildet sein kann, dient als Filterhalter. Die besondere Wirkungsweise dieses Filterhalters besteht darin, dass er mit Hilfe einer Dichtlippe und der eingesetzten Filterplatte, also mit Hilfe von herkömmlichen Teilen, beim Einführen in den Säulenkörper das zuvor als Suspension eingefüllte Chromatographiematerial in nach innen gegen die Säulenwand abdichtender Weise mit nach unten nimmt, also nach unten in Richtung auf die untere Filterplatte verschiebt. Im Unterschied zu bekannten Einschraubadaptern wird das Chromatographiematerial innerhalb weniger Sekunden auf einen gewünschten Wert homogen verdichtet, ohne dass ein von außen wirkender Fluss eines Mediums erforderlich wäre. Durch diese Vorgehensweise wird das einfache und reproduzierbare Packen einer großen Zahl von Säulen mit weit geringerem Aufwand als beim Packen unter Fluss ermöglicht.

Die Besonderheit dieser technischen Lösung ergibt sich insbesondere durch die Kombination der Chromatographiesäule mit einem Stempel beziehungsweise einer Probenkammer. Dabei sind die Dimensionen der Chromatographiesäule einerseits und des Filterhalters andererseits so gewählt, dass sich die gewünschten Klemmeigenschaften ergeben. Der als Filterhalter dienende Stempel beziehungsweise die Probenkammer sind so ausgelegt, dass nach Einschieben in die Chromatographiesäule durch den engen Kontakt zwischen der Außenwand des Filterhalters und der Innenwand des Säulen körpers ein auf der elastischen Rückstellkraft der Packung des Chromatographiematerials beruhendes Zurückrutschen des Filterhalters wirksam unterbunden wird. Es wird hier also die von dem Filterhalter fixierte obere Filterplatte einerseits durch das komprimierte Chromatographiematerial von unten her, andererseits durch das Festsitzen des Filterhalters auf Anschlag im Säulenkörper mit einer vordefinierten Kraft von oben beaufschlagt und in einer vordefinierten Position fixiert. Der Filterhalter zeichnet sich also dadurch aus, dass er auch dem durch einen longitudinalen Transport von Flüssigkeit durch die Säule auftretenden Druckabfall Stand hält und dabei wegen des Anpressdrucks an die Säulenwand in einer fixierten Position bleibt.

Weiterhin hat sich gezeigt, dass die erfindungsgemäßen Chromatographiesäulen, mit den oben aufgeführten Medien mit entsprechenden Verdichtungen und zu einer Höhe in der Gelkammer zwischen 2 und 25 mm gepackt, vorzugsweise jedoch zu Höhen zwischen 5 und 20 mm, insbesondere jedoch zu Höhen zwischen 8 und 12 mm gepackt, im wesentlichen unter Schwerkraft betrieben werden können. Dies bedeutet, dass nach Befüllen der Probenkammer der vertikal aufgestellten Säulen mit einer flüssigen Probe oder einem Laufmittel nach kurzer Zeit ein longitudinaler Fluss in der Säule entsteht, der exakt dann zum Erliegen kommt, wenn das Flüssigkeitsniveau die Oberkante der oberen Filterplatte errient. Wahlweise kann der Fluss sofort nach Probenaufgabe durch kurzzeitiges Zentrifugieren von 5 bis zu 15 Sekunden bei geringer Zentrifugalbeschleunigung von 10 bis zu 50 $\times$ g angestoßen werden. Vorzugsweise wird bei Säulen der in Figur 1 gezeigten Dimensionen 10 Sekunden lang bei 18 $\times$ g zentrifugiert, entsprechend einer integralen Zentrifugalbeschleunigung von 5. Zentrifugationsschritte mit derart geringen integralen Zentrifugalbeschleunigungen haben erfahrungsgemäß noch keinen merklichen negativen Effekt auf die Trennleistung der Chromatographiesäulen, da der weit überwiegende Teil des longitudinalen Flüssigkeitsstroms weiterhin durch die Schwerkraft bewirkt wird und daher gleichmäßig über den Säulenquerschnitt erfolgt.

Ein wichtiger Vorteil der erfindungsgemäßen Chromatographiesäulen besteht darin, dass stets ein der jeweils aufgegebenen Flüssigkeitsmenge entsprechendes Volumen am Auslauf der Säule erscheint. Das ansonsten bei Schwerkraftbetrieb von Chromatographiesäulen häufig zu beobachtende Trockenlaufen unterbleibt, da ein Einsinken der Flüssigkeit unter das Niveau der oberen Filterplatte durch die Wirkung der Kapillarkräfte in dieser verhindert wird. Auch eine eventuell nachgeschaltete bis zu 2 Minuten dauernde Zentrifugation, mit Beschleunigungen bis zu 500 $\times$ g, zur Entfernung von Flüssigkeitsresten aus dem Auslaufstutzen der Säulen hat ebenfalls kein Trockenlaufen derselben zur Folge.

**Anwendungen**

Die erfindungsgemäßen Chromatographiesäulen können einzeln oder gleichzeitig bis zu mehreren hundert Stück in einer Vielzahl von Anwendungen zur chromatographischen Trennung von hauptsächlich biologischen Substanzen, mit Elution in aufeinanderfolgenden diskreten Arbeitsschritten, verwendet werden.

Beispiele für derartige Anwendungen sind:

- Bestimmung der volumetrischen Bindungskapazität und anderen charakteristischen Eigenschaften von Chromatographiematerialien für spezifische Zielsubstanzen unter verschiedenen Bedingungen;

- Optimierung von Parametern für die Trennung biologischer Substanzgemische,

- Simulation von Trennprozessen im verkleinerten Maßstab, z.B. in der Prozessvalidierung;

- verschiedene Arten der Probenvorbereitung für analytische oder präparative Zwecke mit biologischen Proben, z.B. Entsalzung von Proteinlösungen, Abtrennung von Antikörpern und Albuminen aus Blutproben, Isolierung oder Aufreinigung von Antikörpern;

- Aufreinigung von Nukleinsäuren (Plasmide, etc.) für diverse molekularbiologische und diagnostische Zwecke;

- Aufreinigung rekombinanter Proteine, die gentechnisch mit spezifischen Markierungen versehen wurden (His-Tag-Proteine, etc.)

**Beispiel 1**

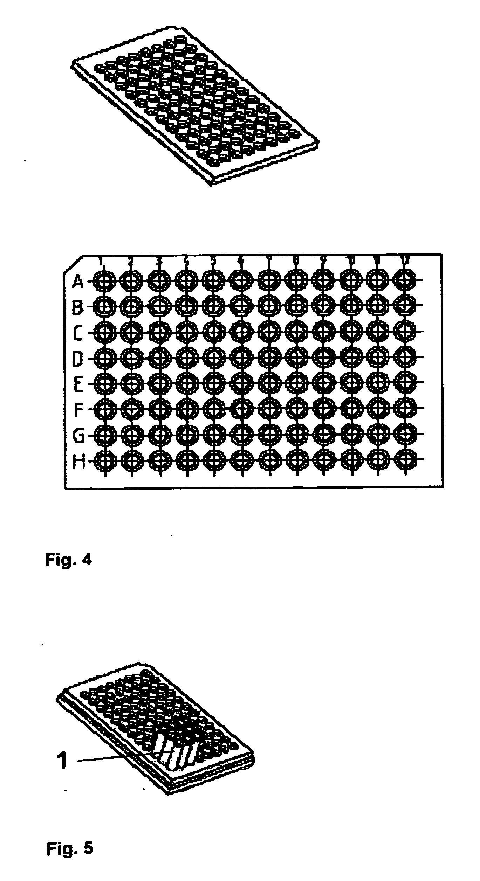

Eine Gesamtheit von 96 der erfindungsgemäßen Chromatographiesäulen, in der bevorzugten Ausführungsform gemäß Figur 1, mit einem Innendurchmesser der Gelkammer von 5 mm und einem Abstand zwischen der oberen und der unteren Filterplatte von 11 mm, entsprechend einem Volumen des gepackten Chromatographiematerials von etwa 216 μl und einer Gesamtlänge von 38 mm wurden mit kreisrund ausgeschnittenen Filterplatten der Marke Freudenberg, Typ F02472, bestückt. Die Dicke der Filterplatten aus PP/PE betrug ca. 0.45 mm, die mittlere Porengröße etwa 17 μm. Das obere in das untere Ende der Probenkammer integrierte Filter hatte einen Durchmesser von 4.6 mm, das untere Filter einen solchen von 5 mm. Die Filterplatten wurden mit Hilfe eines kleinen Einführstempels passenden Durchmessers in die getrennt vorliegenden Säulenkörper und Probenreservoire eingeführt. Danach wurden die Säulenkörper in Achterreihen auf zwei passend gefertigte Säulenhalteplatten, die in den Abmessungen von 96-Well Mikrotiterplatten ausgeführt waren, symmetrisch zueinander aufgesteckt. Figur 4 zeigt im oberen Teil in perspektivischer Darstellung eine beispielhafte Ausführung einer Säulenhalteplatte sowie im unteren Teil in der Aufsicht. Figur 5 zeigt als perspektivisches Bild ein Beispiel der Säulenhalteplatte mit einigen aufgesteckten Chromatographiesäulen 1.

Mit Hilfe einer Mehrkanalpipette wurden dann je 508 μl einer 1:1 Suspension von Toyopearl® SuperQ 650 (M) in 1 M Natriumchloridlösung in die Säulen gegeben und 5 Minuten absitzen gelassen. Danach wurde die Auslauföffnung der Säulen verschlossen und das abgesetzte Chromatographiematerial durch Einführen der Probenreservoire bis zu der durch den Anschlag bestimmten Betthöhe von 11 mm verdichtet. Die so erhaltene Verdichtung betrug 15%, bezogen auf unter der Schwerkraft aus der gleichen Suspension durch vollständige Sedimentation erhaltenes Volumen an sedimentiertem Chromatographiematerial. Die Säulen wurden 3-mal mit je 180 μl 0.1 M Natriumchloridlösung equilibriert. Hierzu wurde das Laufmittel jeweils in die Probenreservoire der Säulen pipettiert, die Säulen auf den Säulenhalteplatten in einer Zentrifuge mit Ausschwingrotor für Mikrotiterplatten zentrifugiert (10 s, 300 rpm, entsprechend 18 × g) und nach 3 Minuten Stehen erneut zentrifugiert (15 s, 500 rpm, entsprechend 50 × g).

Zur Überprüfung der Trennleistung der Minisäulen wurden diese dann mit je 70 μl einer Lösung von Vitamin $B_{12}$ in 1 M Natriumchloridlösung beaufschlagt. Unmittelbar nach dem Auftrag der Probelösung wurde zentrifugiert (10 s 300 rpm, entsprechend 18 × g). Nach drei Minuten Stehen waren die Proben bei sämtlichen Säulen rundum gleichmäßig ca. 5 mm tief in die Gelpackung eingedrungen. Dies konnte visuell überprüft werden, da die Säulen auf der Halteplatte in Reihen mit Abstand von je einer Reihe zueinander gesteckt waren. Es waren nirgends nennenswerte Randeffekte zu beobachten. Die anschließende Stufenelution wurde ebenso durchgeführt wie die Probenaufgabe, jedoch mit je 50 μl der 0.1 M Natriumchloridlösung und je 5 Minuten Stehen nach dem ersten Zentrifugieren. Die Eluate wurden in Mikrotiter-UV-Platten (Greiner, UVStar® 96 Well Mikroplatten). Für jeden von insgesamt 6 Elutionsschritten wurde jeweils eine eigene Mikroplatte verwendet.

Zu den Eluaten wurden je 150 μl Wasser gegeben und die optischen Dichten der Fraktionen mit einem Mikrotiterplatten Photometer bei 540 nm bestimmt.

Die Ergebnisse der Messung der optischen Dichte der Eluatfraktionen wurden zweidimensional graphisch dargestellt sowie für eine Anzahl willkürlich ausgewählter Datensätze (20 aus 96) einer rechnerischen Kurvenanpassung unterzogen. Die jeweils beste Kurvenanpassung auf der Basis stetiger rationaler Funktionen wurde für die nachfolgende Übernahme in die graphische Darstellung ausgewählt. Diese Kurvenanpassung wird im Folgenden als Pseudo-Chromatogramm bezeichnet.

Die Bestimmung der die Pseudo-Chromatogramme charakterisierenden Parameter theoretische Bodenzahl (N, als Anzahl pro Meter) und Asymmetriefaktor ($A_s$) erfolgte wie bei gewöhnlichen aufgezeichneten Chromatogrammen, entsprechend der Beziehungen (1) und (2):

$$N = 5.54 \times \left( \frac{V_e}{W_{1/2}} \right)^2 \times \frac{100}{BH} \qquad (1)$$

$$A_s = \frac{B}{A} \qquad (2)$$

Mit $V_e$ = Elutionsvolumen, $W_{1/2}$ = Breite des Elutionsprofils bei halbmaximaler Höhe, BH = Betthöhe der Gelpackung in cm, B und A = linker und rechter Abschnitt einer Parallelen zur Basislinie bei 10% der maximalen Signalhöhe, die durch eine senkrechte Verbindungslinie zum Maximum des Elutionsprofils geteilt wird.

Ergebnis:

Die zu jeder individuellen Säule gehörigen Messwerte wurden gegen das zugeordnete insgesamt bis dahin aus dieser Säule eluierte Volumen in einem Diagramm aufgetragen. Mit Hilfe einer rechnerischen Kurvenanpassung wurden aus diesen Auftragungen Elutionsprofile approximiert. Hierzu wurden Gleichungen der allgemeinen Form

$$\ln y = a + bx + cx^2 + dx^3 + ex^4$$

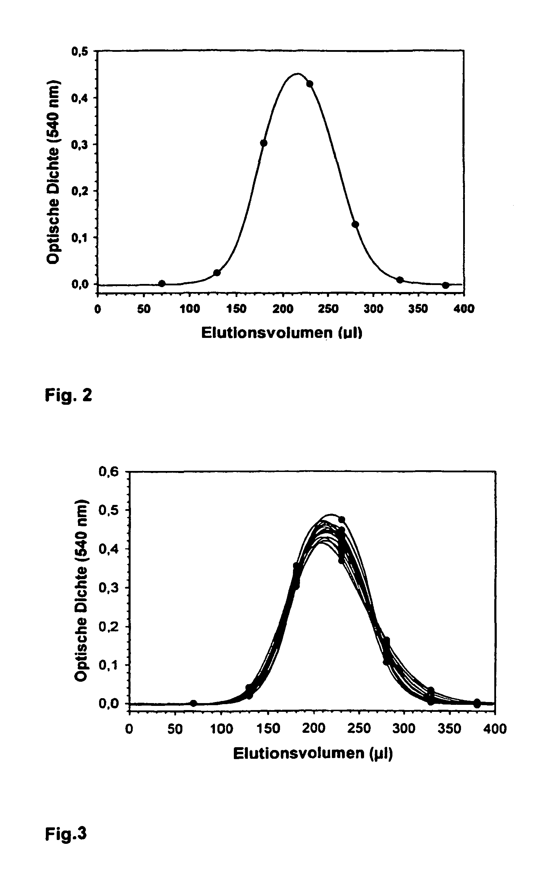

oder noch höherer Ordnung der Potenzglieder verwendet. Ein Beispiel (Säule Nr. 5) für ein so konstruiertes Elutionsprofil ist in Figur 2 gezeigt. Für dieses Pseudo-Chromatogramm wurden 27 theoretische Böden pro cm und ein Asymmetriefaktor von 1,1 bestimmt.

Eine Überlagerung der Elutionsprofile von 20 aus 96 willkürlich ausgewählten Minisäulen ist in Figur 3 gezeigt. Die graphische Überlagerung der Elutionsprofile lässt erkennen, dass die einzelnen Minisäulen nur geringfügig unterschiedliches Verhalten bezüglich Asymmetriefaktor und Bodenzahl aufweisen. Die Unterschiede sind hinsichtlich der maximalen Signalhöhe (Differenzen bis zu 0.1 OD) sowie bei der Geschwindigkeit des Erreichens der Basislinie auf dem absteigenden Ast der Profile (sog. "Tailing") zu erkennen. Unterschiedliches Verhalten in dieser Größenordnung ist auch von größeren Chromatographiesäulen her bekannt. Eine Zusammenfassung der numerischen Auswertung der 20 ausgewählten Säulen ist in Tabelle 1 dargestellt. Demnach lagen die Elutionsmaxima bei $214 \pm 3,2$ $\mu$l, die Zahl der theoretischen Böden betrug $24 \pm 2,2$ pro cm und der Asymmetriefaktor $1,2 \pm 0,15$, mit jeweils größten Abweichungen vom Mittelwert von +4,8 und -8 $\mu$l beim Elutionsmaximum, +3 und -4 bei der Bodenzahl und +0,4 und -0,2 beim Asymmetriefaktor.

Es hat sich herausgestellt, dass sich bei Chromatographiesäulen mit einem auch als Luer-Konus bezeichneten herkömmlichen Luer-Ansatz durch Kapillarkräfte sich Flüssigkeit im Ansatz halten kann. Um diesem Phänomen entgegenzuwirken, kann der Luer-Ansatz auch ersetzt werden.

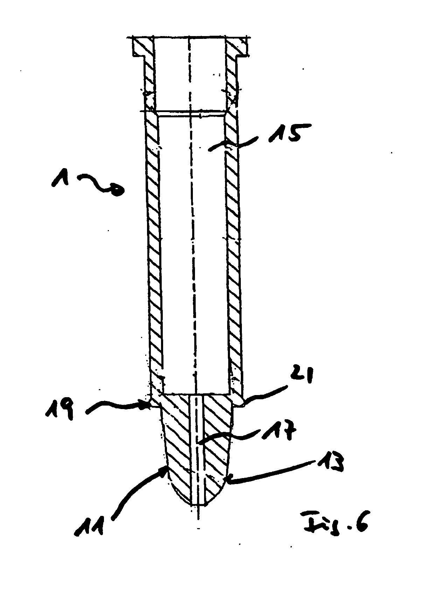

Figur 6 zeigt ein abgewandeltes Ausführungsbeispiel eines Säulekörpers 1, der an seinem unteren Ende mit einem abgewandelten Ansatz 11 versehen ist, der eine konvex gewölbte, vorzugsweise eine parabelförmige Außenfläche 13 aufweist. Vorzugsweise konzentrisch zur Mittelachse 15 des Säulenkörpers 1 verläuft im Ansatz 11 ein Durchlass mit möglichst kleinem Innendurchmesser, vorzugsweise eine Kapillarbohrung 17. Aus dieser austretende Flüssigkeit kann sich an der parabelförmigen Außenfläche 15 nur sehr schlecht halten, sodass allenfalls sehr kleine Tröpfchen an der unteren Mündung der Kapillarbohrung 17 hängenbleiben.

Der Säulenkörper 1 ist vorzugsweise mit einer Verriegelungseinrichtung 19 versehen, mit der der Säulenkörper 1 sicher in einer Probenplatte gehalten wird. Bei dem hier dargestellten Ausführungsbeispiel umfasst die Verriegelungseinrichtung 19 mindestens einen Vorsprung, vorzugsweise einen umlaufenden Ringwulst 21, der in eine geeignete Ausnehmung, hier Ringausnehmung, in der Probenplatte verriegelnd einrastet.

An dem dem Luer-Ansatz des Säulen körpers gemäß Figur 1 beziehungsweise dem Ansatz 11 gegenüberliegenden Ende des Säulenkörpers 1 gemäß Figur 6 kann eine Vorrichtung vorgesehen werden, mit der eine definierte Druckkraft auf den in den Säulenkörper 1 eingeführten Stempel beziehungsweise die dort eingesetzte Probenkammer ausgeübt wird. Auf diese Weise kann eine definierte Verdichtung des Chromatographiematerials in der Gelkammer 8 (siehe Figur 1) eingestellt werden.

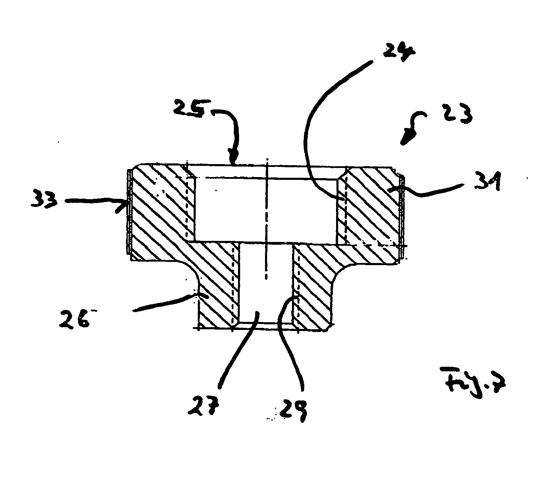

Figur 7 zeigt beispielhaft ein Adapterelement 23 mit einer ein Innengewinde 24 aufweisenden zentralen Öffnung 25 sowie mit einem zylindrischen Ansatz 26, der eine zentrale Ausnehmung 27 aufweist, die ebenfalls mit einem Innengewinde 29 versehen ist. Der Außendurchmesser des Grundkörpers 31 im Bereich der Öffnung 25 ist größer als im Bereich des zylindrischen Ansatzes 26. Er ist hier auf seiner Außenseite mit einer Riffelung 33 versehen, die die Griffigkeit des Adapters 23 erhöht.

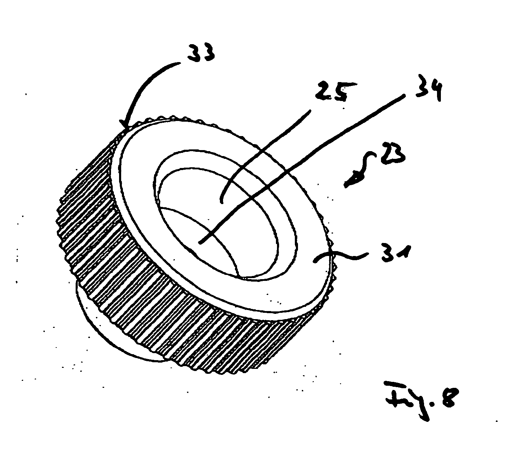

Figur 8 zeigt den Adapter 23 in perspektivischer Ansicht. Deutlich erkennbar ist die Öffnung 25. Bei der hier gewählten Darstellung ist das Innengewinde in diesem Bereich nicht dargestellt.

Deutlich erkennbar wird hier, dass der Grundkörper 31 auf seiner Außenseite im Bereich der Öffnung 25 mit einer Riffelung 33 versehen ist, die in Längsrichtung des Adapters 23 verlaufende Stege und Vertiefungen aufweisen kann. Grundsätzlich ist es aber auch möglich, die Griffigkeit des Adapters 23 in diesem Bereich auf andere Weise zu erhöhen, also durch andere Strukturen oder durch einen Belag mit einem griffigen Material.

Der Adapter 23 wird auf das hintere Ende, also auf das dem Luer-Konus beziehungsweise Ansatz 11 abgewandte Ende eines Säulenkörpers 1 aufgeschraubt, wobei das Innengewinde 24 mit einem Außengewinde am Säulenkörper 1 zusammenwirkt. Da der Innendurchmesser der Ausnehmung 27 kleiner ist als der der Öffnung 25 ergibt sich hier ein Boden 34 der Öffnung 25, der auf einen Stempel, also beispielsweise einer Probenkammer, oder auf einen Adapter einwirkt, der in den Säulenkörper 1 eingeschoben ist. Wird der Adapter 23 mehr oder weniger weit auf den Säulenkörper 1 aufgeschraubt, so erhöht der Boden 34 die Anpresskraft auf den Stempel beziehungsweise den Adapter mehr oder weniger. Bei einer Drehung des hier also als Überwurfdeckel ausgebildeten Adapters 23 wird der Stempel oder Adapter mehr oder weniger weit in das Innere des Säulenkörpers 1 hineingeschoben, sodass sich eine gewünschte Verdichtung des Chromatographiematerials in der Gelkammer 8 einstellen lässt.

Es zeigt sich, dass die den Stempel 23 umfassende Vorrichtung zur Einstellung der Verdichtung des Chromatographiematerials sehr einfach aufgebaut ist.

Das Innengewinde 30 in der Ausnehmung 29 des Adapters 23 dient dazu, einen Anschluss für verschiedene Medien zu schaffen, die bei Einsatz der Chromatographiesäule verwendet werden.

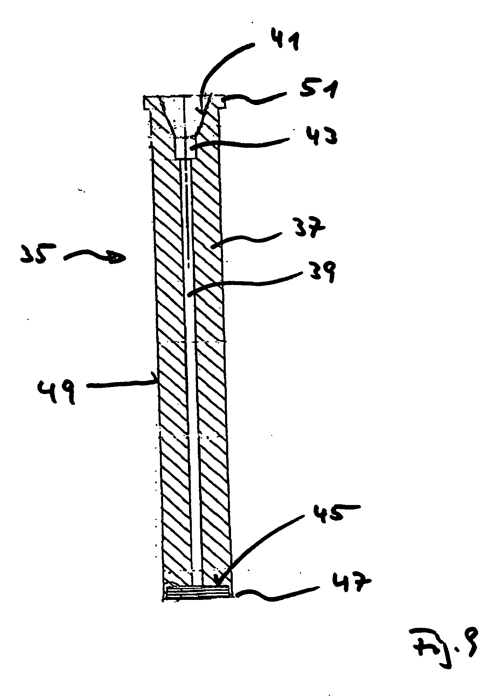

Bei einem bevorzugten Ausführungsbeispiel einer Chromatographiesäule kann anstelle einer Probenkammer ein als Adapter ausgebildeter Stempel 35 in das Innere des Säulenkörpers 1 eingeschoben werden. Ein bevorzugtes Ausführungsbeispiel eines derartigen Stempels ist im Längsschnitt in Figur 9 wiedergegeben.

Der dargestellte Stempel 35 weist einen Grundkörper 37 mit einer durchgehenden Öffnung mit kleinem Durchmesser, vorzugsweise einer Kapillarbohrung 39, auf, die den als Adapter ausgebildeten Stempel 35 in Längsrichtung durchzieht und sich oben in einem konischen Dichtungsbereich 41 öffnet. In diesem können Anschlüsse an eine Pumpe oder eine Pipetiernadel dichtend eingreifen.

Vorzugsweise ist zwischen der Kapillarbohrung 39 und dem konischen Dichtungsbereich 41 noch ein zylindrischer Abschnitt 43 vorgesehen, der auch als Führung dienen kann.

An dem dem konischen Dichtungsbereich 41 gegenüberliegenden Ende des Stempels 35 ist eine Aufnahme 45 vorgesehen, in die eine Filterscheibe eingesetzt werden kann.

Es zeigt sich, dass der untere Rand des Grundkörpers 37 des Stempels 35 einen sich nach unten konisch erweiternden Wandabschnitt 47 aufweist, der über die Umfangsfläche 49 vorsteht und als Dichtung dient. Dieser Wandabschnitt 47 liegt also beim Einbringen des als Adapter dienenden Stempels 35 in einen Säulenkörper 1 dichtend an der Innenwand des Säulenkörpers 1 an und ist vorzugsweise nachgiebig ausgebildet, so dass eine Dichtlippe ausgebildet wird.

An seinem oberen Rand kann der Stempel 35 mit einem Ringwulst 51 versehen sein, der als Anschlag dient und eine definierte Endposition beim Einschieben des Stempels 35 in den Säulenkörper 1 gewährleistet, weil der Ringwulst 51 am oberen Rand des Säulenkörpers 1 anliegt.

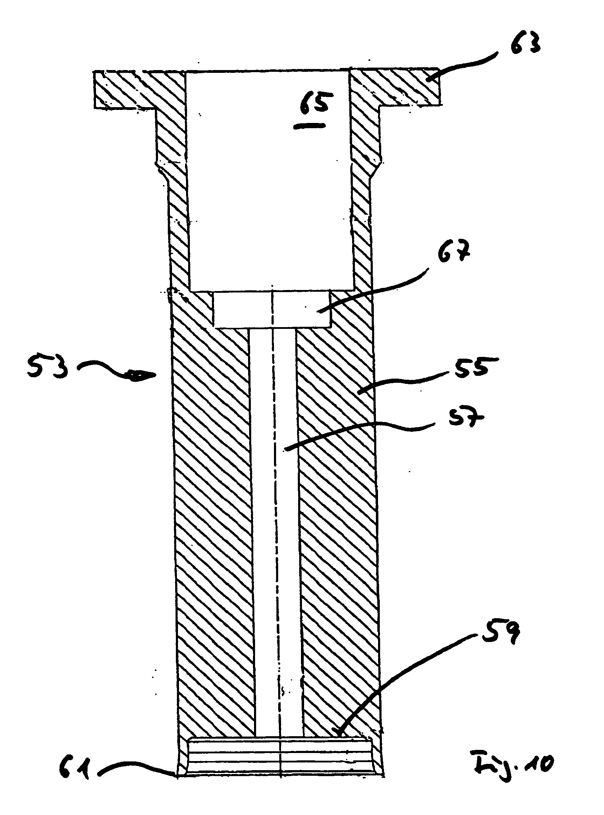

Figur 10 zeigt ein abgewandeltes Ausführungsbeispiel eines als Adapter ausgebildeten Stempels 53, der speziell so ausgelegt ist, dass eine mit Chromatographiesäulen der hier angesprochenen Art ausgestattete Probenplatte automatisiert, vorzugsweise mittels Robotern, bedient werden kann.

Der Stempel 53 weist einen Grundkörper 55 auf, der von einer Durchgangsöffnung, vorzugsweise von einer Kapillarbohrung 57, durchzogen wird, die unten in eine Aufnahme 59 mündet, in die eine Filterplatte einsetzbar ist.

Auch hier ist der unterste Wandabschnitt 61 konisch nach unten aufgeweitet und vorzugsweise elastisch ausgebildet, wie bei dem Ausführungsbeispiel gemäß Figur 9, um eine Dichtung zu realisieren.

Das obere Ende des Stempels 53 ist von einem Ringwulst 63 umgeben, der als Anschlag beim Einschieben des Stempels 53 in einen Säulenkörper 1 dient und eine definierte Position vorgibt.

Im oberen, dem Ringwulst 63 zugewandten Bereich des Stempels 53 ist eine zylindrische Ausnehmung 65 vorgesehen, die als Führung dienen kann. Zusätzlich kann weiter unten im unmittelbaren Übergangsbereich zur Kapillarbohrung 57 ein weiterer Abschnitt 67 vorgesehen werden, der einen kleineren Innendurchmesser als die Ausnehmung 65 aufweist und ebenfalls als Führung dienen kann.

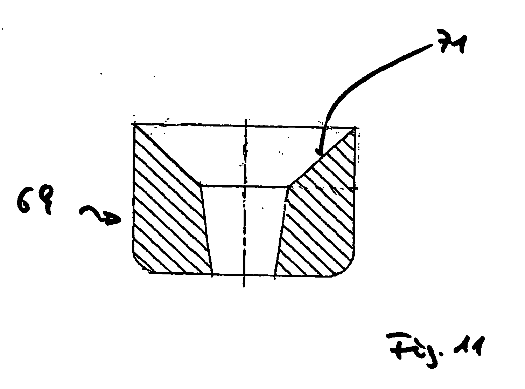

In die zylindrische Ausnehmung 65 des Stempels 53 kann ein die automatische Bedienung der Chromatographiesäule erleichternder Adapter 69 eingesetzt werden, der im Längsschnitt in Figur 11 dargestellt ist. Dessen Außendurchmesser ist an den Innendurchmesser der Ausnehmung 65 so anpassbar, dass er dort lagesicher eingeklemmt ist, nachdem er dort eingeschoben wurde.

An seinem oberen Ende kann der Adapter 69 mit einem konischen Dichtungsbereich 71 versehen werden, an dem automatische Fülleinrichtungen, beispielsweise Pipetiernadeln zumindest bereichsweise dichtend anliegen.

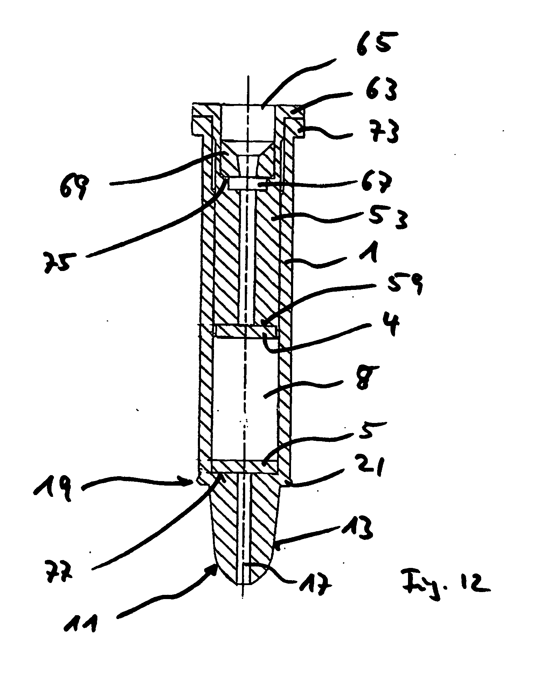

Figur 12 zeigt eine Chromatographiesäule in zusammengebautem Zustand, die die in den Figuren 6, 10 und 11 wiedergegebenen Elemente umfasst. Sie ist im Längsschnitt dargestellt. Gleiche Teile sind mit gleichen Bezugsziffern versehen, sodass auf die Erläuterungen zu den vorangegangenen Figuren verwiesen werden kann.

Die Chromatographiesäule weist einen Säulenkörper 1 auf, in den der Adapter 53 eingeschoben ist. Dabei liegt der Ringwulst 63 an einem als Anschlag dienenden Vorsprung, vorzugsweise einem Ringwulst 73 des Säulenkörpers 1 an, sodass eine definierte Längsposition des als Adapter dienenden Stempels 53 im Inneren des Säulen körpers 1 gegeben ist, damit auch eine definierte Kompression beziehungsweise Verdichtung des Chromatographiematerials.

In die obere zylindrische Ausnehmung 65 des Stempels 63 ist der in Figur 11 dargestellte Adapter 69 eingesetzt, der sich im Übergangsbereich zwischen der zylindrischen Ausnehmung 65 und dem Abschnitt 67 abstützt, wobei hier eine Schulter 75 ausgebildet ist. In das untere Ende des Stempele 63 ist eine obere Filterplatte 4 eingesetzt, die in der Aufnahme 59 im Stempel 53 untergebracht ist. Am unteren Ende der Gelkammer 8 ist die untere Filterplatte 5 erkennbar, die auf der oberen Begrenzungsfläche 77 des Ansatzes 11 aufliegt.

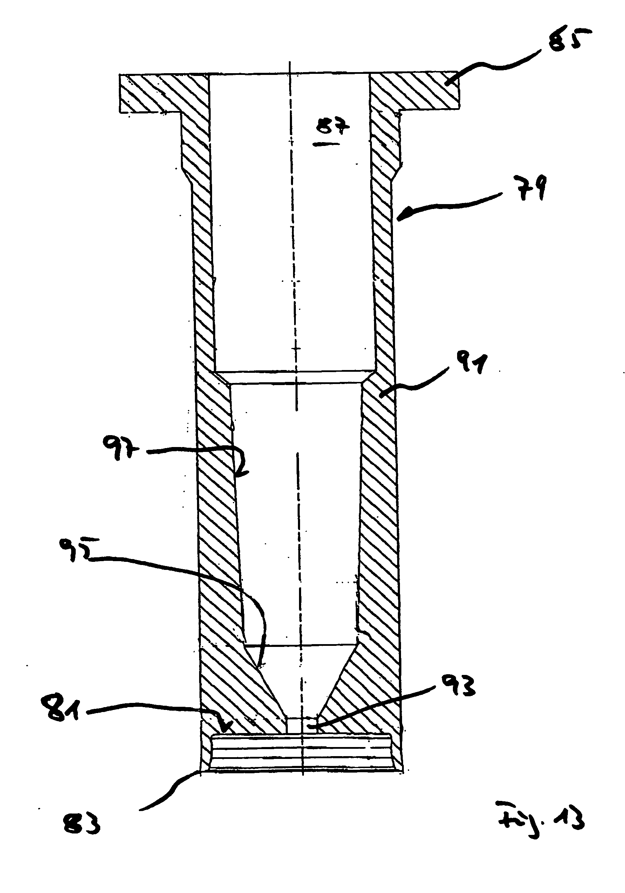

Besonders bevorzugt wird ein im Längsschnitt in Figur 13 dargestellter als Adapter dienender Stempel 79, der grundsätzlich so aufgebaut ist, wie der Stempel 53: Er weist an seinem unteren Ende eine Aufnahme 81 für eine Filterplatte auf, außerdem an seinem unteren Rand einen konisch ausgestellten Wandbereich 83, der vorzugsweise elastisch federnd ist und als Dichtung dient. Schließlich weist er an seinem oberen Ende einen Ringwulst 85 auf, der als Anschlag dient, wenn der Stempel 79 in einen Säulenkörper 1 eingeschoben wird.

Der Innenraum 87 des Stempels 79 ist speziell so ausgebildet, dass er der Aufnahme einer sogenannten Pipetierspitze dient, die wesentlich preiswerter ist, als herkömmliche Pipetiernadeln. Der Grundkörper 89 des Stempels 79 weist an seinem unteren Ende unmittelbar vor der Aufnahme 81 eine Bohrung 91 auf, oberhalb derer ein konischer Dichtungsbereich 93 vorhanden ist. An diesem liegt die Pipetierspitze dichtend an, wenn über diese ein Medium in die unterhalb des Stempels 79 liegende Gelkammer eingebracht werden soll. Oberhalb des konischen Dichtungsbereichs 93 der sich nach oben in Richtung zum Ringwulst 85 öffnet, liegt vorzugsweise ein weiterer sich leicht nach sich nach oben öffnender konischer Bereich 95 vor, an dem sich eine Pipetierspitze abstützen kann. Der oberste Bereich des Innenraums 87 kann zylindrisch ausgebildet sein. Insgesamt ist festzuhalten, dass der Innenraum 87 eben so ausgebildet ist, dass er zur Aufnahme, Abstützung und dichtenden Umfassung herkömmlicher Pipetierspitzen dienen kann.

Der Stempel 79 zeichnet sich dadurch aus, dass bei dessen Verwendung Chromatographiesäulen auf relativ kostengünstige Weise betrieben werden können: Pipetiernadeln sind im Gebrauch einem Verschleiß unterworfen, weil sie eine als Gleitschicht dienende Beschichtung aufweisen, die im Gebrauch abgenutzt wird. In der Regel müssen Pipetiernadeln daher nach einer gewissen Anzahl von Einsatzfällen ausgetauscht werden. Die Herstellung derartiger Nadeln ist relativ aufwendig und damit teuer, insbesondere wegen der äußeren Beschichtung.

Pipetierspitzen können dem gegenüber in großer Zahl relativ preiswert hergestellt werden. Die Ausgestaltung des Stempels 79 als Adapter für derartige Pipetierspitzen erlaubt es, dass die Verwendung von Chromatographiesäulen, in deren Säulenkörper 1 ein Stempel 79 eingebaut ist, wesentlich preiswerter erfolgen kann.

Es zeigt sich, dass allen Ausführungsbeispielen die Verwendung eines Stempels gemeinsam ist, der in einen Säulenkörper 1 über einen definierten Weg einschiebbar ist. Dabei kann der Stempel als Probenkammer oder aber als Adapter ausgelegt sein, der verschiedenste Einsatz- und Verwendungsfälle einer hier beschriebenen Chromatographiesäule ermöglicht.

Wird in Zusammenhang mit Chromatographiesäulen der hier angesprochenen Art ein Stempel verwendet, so kann dieser vorzugsweise auch so ausgebildet werden, dass er an unterschiedliche Innendurchmesser von Säulenkörpern anpassbar ist. Beispielsweise kann der Stempel einen Grundkörper aufweisen, der an verschiedene Einsatzfälle anpassbar ist, die oben beschrieben wurden. Er kann als Probenkammer ausgebildet sein oder aber als Adapter. Dieser Grundkörper kann mit Hülsen unterschiedlicher Dicke oder aber mit einer Anzahl verschiedener Hülsen verwendet werden, die konzentrisch ineinander steckbar sind. Die mindestens eine Hülse umgibt den Grundkörper des Stempels und weist einen Außendurchmesser auf, der an den Innendurchmesser eines Säulenkörpers angepasst ist und dort einerseits dichtend und andererseits so fest anliegt, dass er die oben beschriebene Klemmwirkung zeigt. Wird der Stempel mit oder ohne Hülse in einen entsprechenden Säulenkörper eingeführt, verharrt er in der eingesteckten Position derart, dass er von einem von dem Chromatographiematerial ausgehenden Innendruck nicht verschoben wird und somit den gewünschten Kompressionsdruck auf das Material aufrecht erhält.

**Tabelle 1**

| Säule Nr. | Elutions-Volumen [1] | Halbwertsbreite[2] | Betthöhe | Bodenzahl pro Meter | Bodenzahl pro cm | Abschnitt B bei 10% Peakhöhe | Abschnitt A bei 10% Peakhöhe | Asymmetriefaktor (B/A) |
|---|---|---|---|---|---|---|---|---|
| | µl | µl | cm | N/m | N /cm | mm | mm | |
| | | | | | | | | |
| 1 | 208,0 | 100,0 | 1,1 | 2179 | 22 | 35,0 | 22,0 | 1,6 |
| 5 | 216,0 | 93,0 | 1,1 | 2717 | 27 | 27,0 | 23,5 | 1,1 |
| 10 | 217,0 | 96,0 | 1,1 | 2573 | 26 | 29,5 | 25,5 | 1,2 |
| 15 | 217,4 | 99,4 | 1,1 | 2409 | 24 | 26,5 | 25,0 | 1,1 |
| 20 | 218,9 | 94.0 | 1,1 | 2731 | 27 | 25,0 | 24,0 | 1,0 |
| 25 | 216,7 | 93.0 | 1.1 | 2734 | 27 | 29,5 | 25,0 | 1,2 |
| 30 | 215,8 | 93.0 | 1,1 | 2712 | 27 | 31,0 | 24,2 | 1,3 |
| 35 | 211,0 | 93,0 | 1,1 | 2592 | 26 | 27,8 | 22,3 | 1,2 |
| 40 | 206,0 | 94,6 | 1,1 | 2388 | 24 | 31,0 | 22,5 | 1,4 |
| 45 | 215,8 | 100,0 | 1,1 | 2345 | 23 | 27,5 | 26,0 | 1,1 |
| 50 | 213,2 | 91,5 | 1,1 | 2734 | 27 | 30,5 | 24,5 | 1,2 |
| 55 | 209,5 | 104,0 | 1,1 | 2044 | 20 | 35,0 | 25.0 | 1,4 |
| 60 | 215.8 | 101,0 | 1,1 | 2299 | 23 | 27,0 | 25,5 | 1,1 |
| 65 | 215,1 | 102,5 | 1,1 | 2218 | 22 | 31,5 | 25,0 | 1,3 |
| 70 | 213,5 | 104,0 | 1,1 | 2122 | 21 | 35,5 | 26,0 | 1,4 |
| 75 | 214,2 | 103,2 | 1,1 | 2170 | 22 | 34,5 | 25,5 | 1,4 |
| 80 | 212,6 | 96,2 | 1,1 | 2460 | 25 | 30,0 | 24,0 | 1,3 |
| 85 | 214,8 | 100,9 | 1,1 | 2282 | 23 | 27,0 | 26,0 | 1,0 |
| 90 | 215,8 | 100,9 | 1.1 | 2304 | 23 | 27,3 | 26.8 | 1,0 |
| 95 | 214,2 | 100,9 | 1,1 | 2270 | 23 | 27,5 | 25,0 | 1,1 |
| **Mittelwert** | **214,1** | **98,1** | | **2414** | **24** | | | **1,2** |

Bodenzahlen und Asymmetriefaktoren der Elutionsprofile für die Pseudo-Chromatogramme von 20 ausgewählten von 96 gleichartigen Minisäulen.

(fortgesetzt)

Bodenzahlen und Asymmetriefaktoren der Elutionsprofile für die Pseudo-Chromatogramme von 20 ausgewählten von 96 gleichartigen Minisäulen.

| Säule Nr. | Elutions-Volumen [1] | Halbwertsbreite[2] | Betthöhe | Bodenzahl pro Meter | Bodenzahl pro cm | Abschnitt B bei 10% Peakhöhe | Abschnitt A bei 10% Peakhöhe | Asymmetriefaktor (B/A) |
|---|---|---|---|---|---|---|---|---|
| | $\mu$l | $\mu$l | cm | N/m | N /cm | mm | mm | |
| **STABWN[3]** | **3,2** | **4,1** | | **222** | **2,2** | | | **0,15** |

[1] Das Elutionsvolumen wird dem rechnerisch ermittelten Maximum des Elutionsprofils zugeordnet

[2] Die Halbwertsbreite entspricht der Breite des Elutionsprofils auf einer Höhe, die 50% des Abstands zwischen Basislinie und maximaler Höhe des Profils entspricht

[3] Die Standardabweichungen (STABWN) wurden gemäß nachstehender Formel berechnet:

$$STABWN = \sqrt{\frac{\sum (x - \bar{x})^2}{n}}$$

Wobei $x$ die einzelnen Messwerte sind, $\bar{x}$ der Mittelwert und $n$ die Anzahl der Messwerte.

**Patentansprüche**

1. Chromatographiesäule für die Verwendung mit definiert gepackten Chromatographiematerialien, wobei das Chromatographiematerial in definiert verdichtetem Zustand in einem - vorzugsweise zylindrischen -, mit einer Auslauföffnung (9) versehenen Säulenkörper (1) zwischen zwei Filterplatten eingeschlossen wird, die ihrerseits durch Kontakt mit innerhalb des Säulenkörpers angeordneten Auflageflächen in bestimmtem Abstand zueinander fixiert werden, die untere Filterplatte (5) durch passgenaue Auflage auf einem Vorsprung im Säulenkörper (1) in seiner das Chromatographiematerial nach unten begrenzenden Position gehalten wird, und wobei ein in den Säulenkörper (1) eingesetzter Stempel vorgesehen ist, **dadurch gekennzeichnet, dass** die obere Filterplatte (4) in den unteren Teil des Stempels integriert ist, die obere Filterplatte (4) durch den in den Säulenkörper mit geringer Übergröße bezüglich des Durchmessers desselben eingepassten Stempel in seiner das Chromatographiematerial nach oben hin abschließenden Position fixiert wird, und dass der Stempel als Probenkammer oder als Adapter ausgebildet ist.

2. Chromatographiesäule gemäß Anspruch 1, bei der der Vorsprung eine Breite zwischen 0.3 mm und einem Wert aufweist, der in der Mitte der Säule eine Abflussöffnung von mindestens 1 mm Durchmesser belässt.

3. Chromatographiesäule gemäß einem der vorhergehenden Ansprüche, **dadurch gekennzeichnet, dass** deren oberer Rand als Auflage ausgebildet ist, die als Begrenzung für die Tiefe wirkt, bis zu der hin der Stempel in den Säulenkörper eingeführt werden kann.

4. Chromatographiesäule gemäß einem der vorhergehenden Ansprüche, bei dem am unteren Ende des Stempels eine Öffnung für den Durchtritt von Flüssigkeiten aus der Probenkammer (2) in die obere Filterplatte (4) vorgesehen ist, die einen Durchmesser aufweist, der zwischen 1 mm und von bis zu 2 mm geringer ist als der Innendurchmesser des Säulenkörpers.

5. Chromatographiesäule gemäß einem der vorhergehenden Ansprüche, **dadurch gekennzeichnet, dass** der untere Rand des Stempels als Dichtlippe (10) ausgeführt ist, die eine vollständige und dauerhafte Abdichtung zwischen Probenreservoir (3) und Innenwand des Säulenkörpers (1) gewährleistet.

6. Chromatographiesäule gemäß Anspruch 1, **dadurch gekennzeichnet, dass** die obere Filterplatte (4) in den unteren Teil des Stempels integriert ist, indem der untere Teil des Stempels als Filteraufnahme ausgeführt ist, dergestalt, dass die durch Einsetzen integrierte Filterplatte (4) auf Höhe der Dichtlippe (10) zu liegen kommt.

7. Chromatographiesäule gemäß Anspruch 6, **dadurch gekennzeichnet, dass** die durch Einsetzen integrierte Filterplatte (4) in einem Abstand von bis zu 5 mm, vorzugsweise von bis zu 3 mm und insbesondere bis zu 1 mm oberhalb der Dichtlippe (10) zu liegen kommt.

8. Chromatographiesäule gemäß einem der vorhergehenden Ansprüche, **dadurch gekennzeichnet, dass** der Innendurchmesser (7) des Säulenkörpers 3 mm bis 16 mm beträgt, vorzugsweise 4 mm bis 10 mm und insbesondere 5 mm bis 8 mm beträgt.

9. Chromatographiesäule gemäß einem der vorhergehenden Ansprüche, **dadurch gekennzeichnet, dass** der Innendurchmesser (7) des Säulenkörpers 8 mm bis 20 mm beträgt und/oder bei der die eingesetzte und die durch Einsetzen integrierte Filterplatte eine Materialstärke von 0.4 bis 3 mm aufweisen.

10. Chromatographiesäule gemäß einem der vorhergehenden Ansprüche, **dadurch gekennzeichnet, dass** diese mit definiert verdichteten quasi-elastischen Packungen von Chromatographiemedien gefüllt sind und bei denen ein von oben zum Auslauf gerichteter Fluss durch die Wirkung der Schwerkraft oder einer Zentrifugalkraft oder einer Kombination dieser Kräfte bewirkt wird.

**11.** Chromatographiesäule nach einem der vorhergehenden Ansprüche, **dadurch gekennzeichnet, dass** der Stempel an seinem Inneren im Säulenkörper (1) liegenden Ende eine Aufnahme aufweist, in die eine Filterplatte durch Einsetzen integrierbar ist.

**12.** Chromatographiesäule nach einem der vorhergehenden Ansprüche, **dadurch gekennzeichnet, dass** der Stempel an seinem oberen Ende einen Anschlag aufweist.

**13.** Chromatographiesäule nach einem der vorhergehenden Ansprüche, **dadurch gekennzeichnet, dass** der Stempel an seinem oberen Ende einen konischen Dichtbereich aufweist.

**14.** Chromatographiesäule nach einem der vorhergehenden Ansprüche, **dadurch gekennzeichnet, dass** der Stempel einen Hohlraum zur Aufnahme eines Adapters aufweist.

**15.** Chromatographiesäule nach einem der vorhergehenden Ansprüche, **dadurch gekennzeichnet, dass** an deren oberen Ende eine Vorrichtung vorgesehen ist, mit der eine definierte Druckkraft auf den im Säulenkörper eingeführten Stempel ausübbar ist.

**16.** Chromatographiesäule nach einem der vorhergehenden Ansprüche, **dadurch gekennzeichnet, dass** sie einen Säulenkörper (1) mit einem Ansatz (11) aufweist, der eine gekrümmte, vorzugsweise parabelförmige, Außenfläche (13) aufweiset.

**17.** Chromatographiesäule nach einem der vorhergehenden Ansprüche, **dadurch gekennzeichnet, dass** der Säulenkörper (1) mit einer Verriegelungseinrichtung (19) zur Verankerung in einer Probenplatte versehen ist.

**18.** Chromatographiesäule nach einem der vorhergehenden Ansprüche, **dadurch gekennzeichnet, dass** der Stempel als Probenkammer ausgebildet ist.

**19.** Chromatographiesäule nach einem der vorhergehenden Ansprüche, **dadurch gekennzeichnet, dass** der Stempel als Adapter zur Aufnahme einer Pipetierspitze ausgebildet ist.

**20.** Chromatographiesäule nach einem der vorhergehenden Ansprüche, **dadurch gekennzeichnet, dass** der Stempel als Adapter ausgebildet ist, der einen Grundkörper und mindestens eine diesen umgebende Hülse aufweist, sodass die Umfangsfläche an Säulenkörper (1) mit unterschiedlichen Innendurchmessern anpassbar ist.

**Claims**

**1.** A chromatography column for use with chromatographic materials that are packed in a defined manner, wherein the chromatographic material, while being in a state where it is compacted in a defined manner, is enclosed between two filter plates in a column body (1) that is provided with an outlet opening (9), said column body (1) being preferably cylindrical, wherein said filter plates are fixed in place at a specific distance to each other by contact with supporting surfaces arranged inside the column body, wherein the lower filter plate (5) is held in its position in which it forms the lower limit of the chromatographic material by being supported on a projection in the column body (1) in a precisely fitting manner, and wherein a plunger inserted into the column body (1) is provided, **characterized in that** the upper filter plate (4) is integrated in the lower part of the plunger, the upper filter plate (4) is fixed in place in its position in which it forms the upper limit of the chromatographic material by the plunger being fitted into the column body with a minor oversize with respect to the diameter of the column body, and **in that** the plunger is designed as a sample chamber or as an adapter.

**2.** The chromatography column according to claim 1, wherein the projection has a width between 0.3 mm and a value which leaves a discharge opening in the center of the column, said discharge opening having a diameter of at least 1 mm.

**3.** The chromatography column according to any one of the preceding claims, **characterized in that** the upper edge thereof is formed as a support which acts as a limitation for the depth down to which the plunger can be introduced into the column body.

**4.** The chromatography column according to any one of the preceding claims, wherein an opening is provided at the lower end of the plunger for the passage of liquids from the sample chamber (2) into the upper filter plate (4), said opening having a diameter which is between 1 mm and up to 2 mm less than the inside diameter of the column body.

5. The chromatography column according to any one of the preceding claims, **characterized in that** the lower edge of the plunger is designed as a sealing lip (10) which ensures a complete and long-lasting seal between the sample reservoir (3) and the internal wall of the column body (1).

6. The chromatography column according to claim 1, **characterized in that** the upper filter plate (4) is integrated into the lower part of the plunger by the lower part of the plunger being designed as a filter holding fixture in such a manner that the filter plate (4) that is integrated by being inserted comes to rest at the level of the sealing lip (10).

7. The chromatography column according to claim 6, **characterized in that** the filter plate (4) that is integrated by being inserted comes to rest at a distance of up to 5 mm, preferably of up to 3 mm and in particular of up to 1 mm above the sealing lip (10).

8. The chromatography column according to any one of the preceding claims, **characterized in that** the inside diameter (7) of the column body is 3 mm to 16 mm, preferably 4 mm to 10 mm and in particular 5 mm to 8 mm.

9. The chromatography column according to any one of the preceding claims, **characterized in that** the inside diameter (7) of the column body is 8 mm to 20 mm and/or wherein the filter plate that is inserted and is integrated by being inserted have a material thickness of 0.4 to 3 mm.

10. The chromatography column according to any one of the preceding claims, **characterized in that** said chromatography column is filled with quasi-elastic packings of chromatographic media, said packings being compacted in a defined manner, and wherein a flow that is directed from the top to the outlet is caused by the effect of gravity or by a centrifugal force or by a combination of these forces.

11. The chromatography column according to any one of the preceding claims, **characterized in that** the plunger comprises a holding fixture at its inner end disposed in the column body (1), wherein a filter plate can be integrated into said holding fixture by being inserted therein.

12. The chromatography column according to any one of the preceding claims, **characterized in that** the plunger comprises a stop at its upper end.

13. The chromatography column according to any one of the preceding claims, **characterized in that** the plunger comprises a conical sealing portion at its upper end.

14. The chromatography column according to any one of the preceding claims, **characterized in that** the plunger comprises a cavity for receiving an adapter.

15. The chromatography column according to any one of the preceding claims, **characterized in that** a device which can be used to exert a defined compressive force onto the plunger that is introduced into the column body is provided at the upper end of said chromatography column.

16. The chromatography column according to any one of the preceding claims, **characterized in that** it comprises a column body (1) with an attachment (11) which comprises a curved external surface (13) that is, preferably, parabolic in shape.

17. The chromatography column according to any one of the preceding claims, **characterized in that** the column body (1) is provided with a locking device (19) for anchoring in a sample plate.

18. The chromatography column according to any one of the preceding claims, **characterized in that** the plunger is designed as a sample chamber.

19. The chromatography column according to any one of the preceding claims, **characterized in that** the plunger is designed as an adapter for receiving a pipette tip.

20. The chromatography column according to any one of the preceding claims, **characterized in that** the plunger is designed as an adapter which comprises a basic body and at least one sleeve surrounding said basic body, with the result that the circumferential surface can be adjusted to the column body (1) having varying inside diameters.

**Revendications**

1. Colonne de chromatographie pour l'utilisation avec des matériaux de chromatographie emballés de manière définie, dans laquelle le matériau de chromatographie est inclus à l'état comprimé de manière définie dans un corps de colonne (1), de préférence cylindrique, pourvu d'une ouverture de sortie (9) entre deux plaques de filtration qui sont fixées de leur côté par contact avec des surfaces d'appui disposées au sein du corps de colonne à un écart défini l'une de l'autre, la plaque de filtration inférieure (5) est maintenue dans sa position limitant le matériau de chromatographie vers le bas par un appui ajusté sur une saillie dans le corps de colonne (1), et dans laquelle un piston inséré dans le corps de colonne (1) est prévu, **caractérisée en ce que** la plaque de filtration supérieure (4) est intégrée dans la partie inférieure du piston, la plaque de filtration supérieure (4) est fixée dans sa position isolant le matériau de chromatographie vers le haut par le piston ajusté dans le corps de colonne avec une faible dimension surélevée par rapport au diamètre de celui-ci, et que le piston est réalisé en tant que chambre d'essai ou en tant qu'adaptateur.

2. Colonne de chromatographie selon la revendication 1, dans laquelle la saillie présente une largeur entre 0,3 mm et une valeur qui laisse une ouverture d'écoulement d'au moins 1 mm de diamètre au milieu de la colonne.

3. Colonne de chromatographie selon l'une quelconque des revendications précédentes, **caractérisée en ce que** son bord supérieur est réalisé en tant qu'appui qui agit comme limitation pour la profondeur jusqu'à laquelle le piston peut être introduit dans le corps de colonne.

4. Colonne de chromatographie selon l'une quelconque des revendications précédentes, dans laquelle une ouverture pour le passage de liquides de la chambre d'essai (2) dans la plaque de filtration supérieure (4) est prévue à l'extrémité inférieure du piston, laquelle présente un diamètre qui est inférieur entre 1 mm et jusqu'à 2 mm au diamètre interne du corps de colonne.

5. Colonne de chromatographie selon l'une quelconque des revendications précédentes, **caractérisée en ce que** le bord inférieur du piston est réalisé en tant que lèvre d'étanchéité (10) qui garantit une étanchéification entière et durable entre le réservoir d'essai (3) et la paroi interne du corps de colonne (1).

6. Colonne de chromatographie selon la revendication 1, **caractérisée en ce que** la plaque de filtration supérieure (4) est intégrée dans la partie inférieure du piston **en ce que** la partie inférieure du piston est réalisée en tant que logement de filtration de telle sorte que la plaque de filtration (4) intégrée par insertion vient en appui à hauteur de la lèvre d'étanchéité (10).

7. Colonne de chromatographie selon la revendication 6, **caractérisée en ce que** la plaque de filtration (4) intégrée par insertion vient en appui à un écart allant jusqu'à 5 mm, de préférence jusqu'à 3 mm et notamment jusqu'à 1 mm au-dessus de la lèvre détanchéité (10).

8. Colonne de chromatographie selon l'une quelconque des revendications précédentes, **caractérisée en ce que** le diamètre interne (7) du corps de colonne est de 3 mm à 16 mm, de préférence 4 mm à 10 mm et notamment 5 mm à 8 mm.

9. Colonne de chromatographie selon l'une quelconque des revendications précédentes, **caractérisée en ce que** le diamètre interne (7) du corps de colonne est de 8 mm à 20 mm et/ou dans laquelle la plaque de filtration insérée et intégrée par insertion présentent une épaisseur de matériau de 0,4 à 3 mm.

10. Colonne de chromatographie selon l'une quelconque des revendications précédentes, **caractérisée en ce que** celles-ci sont remplies d'emballages comprimés de manière définie, quasi élastiques de milieux de chromatographie et dans lesquelles un écoulement orienté depuis le haut vers la sortie est provoqué par l'action de la force de pesanteur ou dune force centrifuge ou dune combinaison de ces forces.

11. Colonne de chromatographie selon l'une quelconque des revendications précédentes, **caractérisée en ce que** le piston présente à son extrémité interne se situant dans le corps de colonne (1) un logement dans lequel une plaque de filtration peut être intégrée par insertion.

12. Colonne de chromatographie selon l'une quelconque des revendications précédentes, **caractérisée en ce que** le piston présente à son extrémité supérieure une butée.

13. Colonne de chromatographie selon l'une quelconque des revendications précédentes, **caractérisée en ce que** le piston présente à son extrémité supérieure une zone d'étanchéité conique.

14. Colonne de chromatographie selon l'une quelconque des revendications précédentes, **caractérisée en ce que** le piston présente un espace creux pour la réception d'un adaptateur.

15. Colonne de chromatographie selon l'une quelconque des revendications précédentes, **caractérisée en ce qu'**un dispositif avec lequel une pression définie peut être exercée sur le piston introduit dans le corps de colonne est prévu à son extrémité supérieure.

16. Colonne de chromatographie selon l'une quelconque des revendications précédentes, **caractérisée en ce qu'**elle présente un corps de colonne (1) avec un épaulement (11) qui présente une surface externe (13) courbée, de préférence parabolique.

17. Colonne de chromatographie selon l'une quelconque des revendications précédentes, **caractérisée en ce que** le corps de colonne (1) est pourvu d'un dispositif de verrouillage (19) pour l'ancrage dans une plaque de prélèvement d'éprouvettes.

18. Colonne de chromatographie selon l'une quelconque des revendications précédentes, **caractérisée en ce que** le piston est réalisé en tant que chambre d'essai.

19. Colonne de chromatographie selon l'une quelconque des revendications précédentes, **caractérisée en ce que** le piston est réalisé en tant qu'adaptateur pour la réception d'une pointe de pipetage.

20. Colonne de chromatographie selon l'une quelconque des revendications précédentes, **caractérisée en ce que** le piston est réalisé en tant qu'adaptateur qui présente un corps de base et au moins un manchon entourant celui-ci de sorte que la surface périphérique peut être adaptée au corp de colonne (1) avec différents diamètres internes.

**Fig.1**

Fig. 2

Fig.3

**Fig. 4**

**Fig. 5**

Fig. 6

25 24

23

33

31

26

27 29

Fig.7

33 25 34 23 31

Fig. 8

Fig. 9

Fig. 10

69

71

Fig. 11

Fig. 12

Fig. 13

**IN DER BESCHREIBUNG AUFGEFÜHRTE DOKUMENTE**

**In der Beschreibung aufgeführte Patentdokumente**

- EP 0655624 A1
- US 6103195 A